# NEUE EUROPÄISCHE PATENTSCHRIFT

(11) **EP 1 251 614 B2**
(45) Veröffentlichungstag und Bekanntmachung des Hinweises auf die Entscheidung über den Einspruch: **24.11.2010**
(45) Hinweis auf die Patenterteilung: 13.06.2007
(21) Anmeldenummer: 02008825.8
(22) Anmeldetag: 19.04.2002
(51) Int. Cl.: H02B 11/12

(54) **Schaltanlage mit einem Gastank und einer selbsttragenden Baugruppe**
Switchgear with a gas tank and a self-supporting module
Tableau de commutation avec un réservoir à gaz et un module autoportant

(30) Priorität: 20.04.2001 DE 10119220
(43) Veröffentlichungstag der Anmeldung: 23.10.2002
(73) Patentinhaber: Ormazabal Anlagentechnik GmbH, 47804 Krefeld (DE)
(72) Erfinder: Achten, Klaus, 47807 Krefeld (DE); Bünten, Peter, 47877 Willich (DE); Falkenberg, Frank, 41236 Mönchen-Gladbach (DE); Gossen, Claudia, 47798 Krefeld (DE); Kurrat, Michael, 38116 Braunschweig (DE)
(74) Vertreter: Cohausz & Florack

(56) Entgegenhaltungen:
- EP-A1- 0 684 673
- DE-A- 4 035 472
- DE-A- 4 035 472
- DE-A1- 3 321 836
- DE-A1- 4 312 620
- DE-C1- 4 419 380
- DE-U1- 8 717 730
- JP-A- 05 219 613
- JP-A- 09 322 339
- SIEMENS AG LEISTUNGSSCHALTER-FESTEINBAUANLAGEN BIS 24KV, SF6-ISOLIERT, TYP 8DC11, KATALOG HA 35.41, SIEMENS August 1995 - August 1995,

## Beschreibung

Die Erfindung betrifft eine selbsttragende Baugruppe für ein Leistungsschaltfeld eines gasisolierten Leistungsschalters, insbesondere in dreipoliger Ausführung.

In der DE 4035 472 C2 wird ein Schaltgerät beschrieben, welches für den Einbau in eine gasisolierte Schaltanlage vorgesehen ist. Das Schaltgerät ist mit seinen Komponenten an einem Rahmen befestigt, der wiederum auf einer Grundplatte angeordnet ist. Die Grundplatte wird über an der Frontseite des Gastanks angeordnete Schraubbolzen mit der Kapselung verschraubt. Die Montage dieses Schaltgeräts ist sehr umständlich, da insbesondere die letzten Montageschritte innerhalb des Gastanks von hinten erfolgen müssen und dabei die Verschraubungselemente schwer zugänglich sind.

Der Erfindung liegt die Aufgabe zugrunde, eine Anordnung für ein montierbares Leistungsschaltfeld entsprechend dem Oberbegriff von Anspruch 1 zu schaffen, durch die durch zeitsparende Vormontage und Prüfung im wesentlichen aller Schaltanlagenkomponenten vor der Komplettierung des Leistungsschaltfeldes nicht nur der Montageaufwand reduziert wird, sondern bei gleichzeitiger Senkung der Herstellungskosten auch relativ kurze Produktions- und Lieferzeiten erzielt werden.

Erfindungsgemäß wird die Aufgabe durch die Merkmale des Hauptanspruchs gelöst. Weiterführende Ausbildungen sind in den Unteransprüchen formuliert.

Der Kern der Erfindung liegt darin, dass eine selbsttragende Baugruppe auf einer Montagewand gebildet wird, die die wesentlichen Komponenten der Schalteranordnung umfasst, und dass die Montagewand mit Führungsmittel versehen ist, die mit im Gastank angeordneten Führungselementen korrespondieren und dass der umlaufende Rand der Montagewand passgenau mit den zur offenen Seite des Gastanks gerichteten Seitenwänden abschließt. Die Baugruppe bildet demnach einen Einschub, der in entsprechend vorbereitete Gastanks (Schotträume) von Leistungsschaltfeldern eingeschoben wird, dort passgenau positioniert ist und anschließend ohne weitere Manipulationen an den Frontoder Seitenwände der Schotträume verschweißt werden kann. Es handelt sich also um eine vor ihrem Einsetzen in den Gastank mechanisch und elektrisch prüfbare und funktionstüchtige Montage-Einheit. Es können somit kontinuierlich solche Baugruppen hergestellt, in Leistungsschaltfeldern montiert und die Schaltfelder komplettiert werden. Anschließend werden diese Schaltfelder einer zentralen Schweißstation zugeführt, wo alle anfallenden Schweißarbeiten in einem Zug durchgeführt werden.

Der Trennschalter (als Dreistellungstrenner) ist dabei auf der Montageplatte, vorzugsweise auf einer Konsole angeordnet. Der Dreistellungstrenner ist dabei mit seinen Gegenkontakten und den Erdungskontakten ausgerüstet und justiert, um weitere Justagearbeiten nach dem Einbringen in den Gastank zu vermeiden. Nur die Stromanschlüsse (Stromschienen) müssen im Gastank noch montiert werden.

Die Trennerkontakte stehen über einen Anschlusswinkel mit dem jeweiligen Stromanschlussträger galvanisch in Verbindung, so dass für die Trennerkontakte kein zusätzliches Stützelement benötigt wird. Unter Berücksichtigung des durch die Anschlusswinkel in diesen herbeigeführten Stromverlaufes wird somit in Verbindung mit der Ein-Position der Schaltmesser, bei der die Trennerkontakte auf einer gemeinsamen, vertikal verlaufenden Achse mit den Trennerkontakten liegen, erreicht, dass sich die elektromagnetischen Kräfte der Stromzuführungen kompensieren.

In weiterer Ausgestaltung der Erfindung ist der Dreistellungstrenner auf einer selbsttragenden Konsole angeordnet und über diese an der Montagewand befestigt. Er steht mit einem Umlenkgetriebe in Wirkverbindung, das mit dem Schalterantrieb des Trennschalters über eine gasdichte Kupplungseinrichtung in der Montagewand verbunden ist.

Um bei dieser Anordnung des Trennschalters gleichzeitig durch die selbsttragende Konsole eine Versteifung der Montagewand zu erreichen, ist die Konsole als zweischenkliges Profil ausgebildet und die Montagewand im Bereich des Trennschalters zur Aufnahme der Konsole rechtwinklig in Richtung des Gastanks unter Bildung eines horizontal verlaufenden Wandabschnittes abgebogen. Dabei sind sowohl an dem horizontal verlaufenden Wandabschnitt als auch an der vertikal verlaufenden Montagewand die Schenkel der als zweischenkliges Profil ausgebildeten Konsole befestigt.

Eine weitere Versteifung der Montagewand, die aufgrund der Bestückung mit im wesentlichen allen zueinander positionierten Schaltanlagenkomponenten ein hohes Gewicht besitzt, wird dadurch erreicht, dass im Bereich der als Vakuumschalter ausgebildeten Leistungsschalter und des Trennschalters die vorzugsweise vertikal verlaufende Montagewand durch eine zweite Wand verstärkt ist, die zumindest im Bereich der dem Trennschalter zugeordneten, gasdichten Kupplungseinrichtung und dem zugehörigen Schalterantrieb eine durch Abbiegen gebildete, in Richtung des Gastanks verlaufende Ausbuchtung besitzt.

Damit das Einsetzen der mit Schaltanlagenkomponenten bestückten Montagewand in den Gastank erleichtert wird, besitzt die Montagewand eine Führungseinrichtung (Positionierelemente). Diese ermöglichen eine seitliche Führung der Montagewand durch Führungsschlitze in seitlichen Führungsblechen, die am Gastank angebracht sind. Die Führungseinrichtung kann auch als Befestigungsvorrichtung, vorzugsweise als Gewindebolzen mit Mutter ausgestaltet sein.

Eine Höhenführung der Montagewand kann dadurch erreicht werden, dass in zwei seitlich angeordneten Laschenblechen Schlitze vorhanden sind, in die beim Einsetzen der Montagewand am Gastank angeordnete Bolzen eingreifen. Damit sind die Voraussetzungen dafür geschaffen, dass die Montagewand positionsgenau eingeschoben wird und in der Einschublage mit den Seitenwänden gasdicht verschweißt werden kann. Der Schweißvorgang erfolgt gemeinsam mit dem Verschweißen der Rückwand, nachdem von der Rückseite des bis dahin offenen Gastanks her alle elektrischen und mechanischen Verbindungen vervollständigt sind.

Bei dem so beschriebenen Leistungsschaltfeld lässt sich vorteilhaft das durch die dem Zugang des Leistungsschaltfeldes zugeordneten Stromschienen erzeugte Stör-Magnetfeld an den Vakuumschaltkammern verringern, indem die Anschlüsse für die dem Zugang des Leistungsschaltfeldes zugeordneten Stromschienen an dem jeweiligen, dem Zugang zugeordneten Stromanschlussträger der Leistungsschalter oberhalb der Vakuumschaltkammern vorgesehen sind. Das führt dazu, dass das Schaltvermögen der Vakuumschaltkammern mit ihrem axialen Magnetfeld nicht mehr negativ beeinflusst wird, so dass platzsparende und kostengünstige Vakuumschaltkammern eingesetzt werden können.

Die verwendete Vakuumschaltröhre besitzt ein axiales Magnetfeld, damit auch im Bereich von Kurzschlussströmen der Metalldampflichtbogen diffus bleibt. Die thermische Belastung der Kontakte bleibt dabei gering und der Kontaktabbrand ist sehr gering. Hierbei darf die magnetische Komponente des Querfeldes zwischen den Kontakten bestimmte Werte nicht überschreiten, dies wird dadurch erreicht, dass die Stromschiene zu den Sammelschienen am oberen Ende des Stromanschlussträgers geführt sind und das magnetische Querfeld zwischen den Kontakten der Schaltkammer teilweise kompensieren.

Zu der erfindungsgemäß ausgebildeten Baugruppe gehört weiterhin eine als Sicherheitseinrichtung dienende Verriegelung, die an der Vorderseite der Montagewand zwischen dem Leistungsschalter und dem Trennschalter sowie zwischen Trennschalter und Erdungsschalter angeordnet ist. Da gemäß der Erfindung der Leistungsschalter und der Trennschalter vor dem Einsetzen der Montagewand in den Gastank eine prüfbare Montageeinheit bilden, kann auch die Verriegelung gemeinsam vormontiert und geprüft werden. Schließlich kann in der Montagewand auch eine Kupplung für ein Ventil zur Gasbefüllung oder für ein Manometer zur Druckanzeige vorgesehen sein, so dass die Gasdurchführung nicht in einer der übrigen Wände des Gastanks vorgesehen werden muss.

Die Erfindung wird in den Figuren anhand eines Ausführungsbeispieles näher erläutert. Die Figuren zeigen im Einzelnen:
Fig. 1 eine Seitenansicht und
Fig. 2 zwei Details zur Verschraubungssituation an den Seitenwänden.

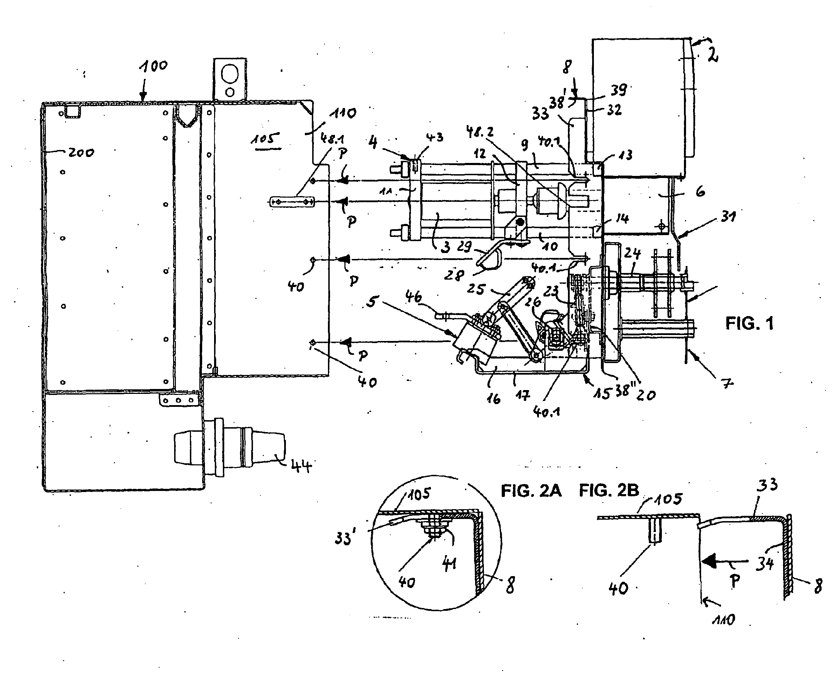

Die Figur 1 zeigt in Seitenansicht die erfindungsgemäße Baugruppe und den metallischen Gastank (Schottraum) 100 mit Rückwand 220 (noch offen zum Zeitpunkt des Einschiebens) und Seitenwänden 105 eines Leistungsschaltfeldes im geschnittenen Zustand. Obwohl die Schaltanlagenkomponenten nur in einpoliger Ausführung dargestellt sind, soll das Leistungsschaltfeld dreipolig ausgeführt sein, so dass die den drei Phasen zugeordneten Schaltanlagenkomponenten jeweils horizontal in einer Ebene liegend (in der Zeichenebene hintereinander) angeordnet sind.

Das tragende Element der Baugruppe zum Einbau in einen mit Isoliergas (hier mit SF6) füllbaren Gastank 100 besteht aus einer senkrecht verlaufenden Montagewand 8, auf deren Vorderseite (außerhalb des Gastanks liegend) und deren Rückseite (nach Einführen im Gastank liegend) Schalterkomponenten montiert sind. Die Montagewand hat am oberen Rand 39 eine Abwinkelung 38' in den Gastank hinein und verläuft auch aus Gründen der mechanischen Verstärkung zweifach abgewinkelt senkrecht nach unten. Die Montagewand hat einen passgenauen Zuschnitt zum Einführen in den nach vorn offenen Gastank (Öffnung 110). Die Baugruppe wird über Positioniermittel und Befestigungselemente (Gewindebolzen 40, Führungsschlitz 40.1, Führungsschiene 48.1, Führungsausnehmung 48.2) im Gastank unverrückbar gelagert. Zu den nach vorn offenen Seitenwänden 105 des Gastanks 100 entsteht eine fugengenaue Position, so dass als letzte Montagearbeit nur die Verschweißung der Schweißfuge zwischen den genannten Rändern zu erfolgen hat.

Es sind eine dem Leistungsschaltfeld zugeordnete Umlenkeinheit 6 vorgesehen, weiterhin drei Vakuumschaltkammern 3 von als Vakuumschalter 4 ausgebildeten Leistungsschaltern und ein dreipoliger Trennschalter (Dreistellungstrenner) 5, der als Hebelschalter ausgebildet ist.

Es sind sowohl die Vakuumschaltkammern 3 als auch der Trennschalter 5 auf der Rückseite der Montagewand und der den Vakuumschaltern 4 und der dem Trennschalter 5 jeweils zugeordnete Schalterantriebe 2,7 an der Vorderseite der Montagewand 8 befestigt. Die Vakuumschaltkammern 4 sind durch ein im wesentlichen aus Isolierstangen 9,10 bestehendes Isoliergerüst, das gleichzeitig die Stromanschlussträger 11,12 der Vakuumschalter 4 aufnimmt, über Polträger 13,14 auf der Rückseite der Montagewand 8 befestigt. Der Trennschalter 5 ist auf einer Konsole 15 angeordnet, die rechtwinklig von der Montagewand 8 in den Gastank hinein abgewinkelt ist. Die selbsttragende Konsole 15 ist als zweischenkliges Profil ausgebildet. Das Profil wird aus einem ersten Schenkel 16 gebildet, der durch rechtwinkliges Abbiegen (Wandabschnitt 17) der Montagewand 8 horizontal verläuft. Ein zweiter Schenkel ist an einer Ausbuchtung 20 einer die Montagewand 8 verstärkenden zweiten Doppelwand über eine nicht dargestellte Schraubverbindung befestigt. Die Konsole kann nach Einschieben in den Gastank mit Muttern 41 an im Gastank vorgesehenen Aufnahmen (Gewindebolzen 40) befestigt werden.

Durch ein Umlenkgetriebe 23, das ebenfalls auf der Konsole 15 angeordnet ist, erfolgt eine Verbindung des Trennschalters 5 mit dem Schalterantrieb 7 über die in der Montagewand 8 vorhandene gasdichte Kupplungseinrichtung 24.

Die von dem Schaltmechanismus des Trennschalters 5 geforderte mechanische Präzision wird über die Konsole 15 und ihre hohe Stanz- und Biegegenauigkeit erreicht. Die genaue Positionierung der Schaltmesser 25 und der Schaltwelle 26 zu den Erderkontakten (28) ist damit schon vor dem endgültigen Einbau in den Gastank gewährleistet, bzw. kann vor dem Einbau überprüft und gegebenenfalls korrigiert werden.

Die Erderkontakte stehen mit dem jeweiligen Stromanschlussträger 12 der Vakuumschalter 4 über einen Anschlusswinkel 29 galvanisch in Verbindung. Die optimale Ausrichtung ist dann vorhanden, wenn die Schaltmesser 25 in ihrer Ein-Position in einer gemeinsamen, vertikal verlaufenden Ebene mit den Trennerkontakten 28 liegen. Durch die Anordnung der Schaltmesser 25 und der Trennerkontakte 28 in der Ein-Position, insbesondere aber auch durch den durch die Anschlusswinkel 29 herbeigeführten Stromverlauf zwischen den Trennerkontakten 28 und den Stromanschlussträgern 12 der Vakuumschalter 4 erfolgt eine Kompensierung der elektromagnetischen Kräfte der Stromzuführungen an den Schaltmessern 25 in der Betriebsstellung.

Wie aus Figur 1 ersichtlich, ist der Trennschalter 5 im Bereich des horizontalen Wandabschnitts 17 abgestützt und befestigt. Es ist jedoch auch eine Ausführungsform möglich, bei der der Trennschalter 5 nur im vertikalen Abschnitt der Montagewand befestigt ist und mit der Montagewand selbsttragend einschiebbar ist. Entsprechend würde die schon näher beschriebene Konsole 15 nicht als zweischenkliges Profil ausgebildet sein. Ein Design für eine solche Konstruktionsvariante kann jedoch der Fachmann einfach entwerfen.

Die Anordnung bildet somit mit der Montagewand 8, die vor dem Einsatz in dem Gastank 100 im wesentlichen mit allen zueinander positionierten Schaltanlagenkomponenten bestückt ist, eine Baugruppe, die vor dem Einsetzen geprüft werden kann. In die Vormontage und Prüfung ist auch die zwischen den Vakuumschaltern 4 und dem Trennschalter 5 als Sicherheitseinrichtung dienende Verriegelung 31 einbezogen.

Zur Erleichtern des Einsetzens und zur fugengenauen Positionierung in Bezug auf die Seitenwände 105 des nach vorn offenen Gastanks der Baugruppe sind die Seitenwände 105 des Gastanks mit Führungsseinrichtungen versehen. Diese bestehen aus an den vertikal verlaufenden Rändern 32 der Montagewand 8 durch rechtwinkliges Abbiegen gebildeten Laschenbleche 33. Die Laschenbleche haben jeweils eine Führungsausnehmung 48.2 zur Positionierung und Abstützung über eine Führungsschiene 48.1, sowie drei Schlitze 40.1 für Gewindebolzen 40 an den Seitenwänden 105. Hierdurch wird eine seitliche Führung und die Befestigung der Montagewand 8 gewährleistet. Die Umkantung 38' am oberen Rand 39 der Montagewand 8 kann ebenfalls eine Einführhilfe darstellen.

Nach dem Einsetzen der Baugruppe erfolgt die Verschweißung an den horizontalen und an den vertikalen Kanten (Bezugszeichen 38', 38") mit den vorderen Seitenwänden 105 des Gastanks 100.

Die Figur 2 zeigt in zwei Details eine Sicht von oben auf einen Gewindebolzen 40 in der Seitenwand 105 bei der Einschiebesituation. Die Baugruppe wird in Pfeilrichtung P (siehe auch Fig. 1) eingeschoben. Das Laschenblech 33 ist mit einem Blechschenkel 34 auf der Rückseite der Montagewand befestigt und in Richtung auf den Gastank abgewinkelt. Die Abwinkelung 33' dient als Einführhilfe. Die Schlitze 40.1 des Laschenblechs greifen über die Bolzen und werden mit Muttern 41 auf den Gewindebolzen 40 verschraubt.

In der vollständig montierten Anordnung der Baugruppe im Gastank sind die Stromschienen so an den Stromanschlussträgern über eine Bohrung (Stromanschluß 43) angeschlossen und nach unten geführt, dass sich die Magnetfelder der Anschlüsse an der Vakuumkammer teilweise kompensieren, so dass die Querkomponente der magnetischen Induktion zwischen den Vakuumkontakten keine unzulässigen Werte erreicht.

Um das durch die dem Zugang des Leistungsschaltfeldes zugeordneten Stromschienen erzeugte Stör-Magnetfeld an den Vakuumschaltkammern 3 zu verringern, was zum Einsatz platzsparender und kostengünstiger Vakuumschaltkammern 3 führt, sind die Stromschienenanschlüsse 43 an den dem Zugang zugeordneten Stromanschlussträgern 11 der Vakuumschalter 4 oberhalb der Vakuumschaltkammern 3 angeordnet.

Die Verbindung der dem Abgang des Leistungsschaltfeldes zugeordneten, am Gastank 100 befestigten Kabeldurchführungen 44 mit dem Trennschalter 5 erfolgt nach dem Einsetzen der Baugruppe in den Gastank 100. Um bei dieser Verbindung durch Stromschienen einen Toleranzausgleich zu berücksichtigen, besitzen die Anschlusslaschen 46 des Trennschalters 5 oder auch die Stromschienen diesen Toleranzausgleich ermöglichende Öffnungen.

Selbstverständlich werden die durch die Erfindung erzielten Vorteile auch dann erreicht, wenn die dem Abgang des Leistungsschaltfeldes zugeordneten Kabeldurchführungen 44 unmittelbar an der Montagewand 8 befestigt sind und zusammen mit den weiteren Schaltanlagenkomponenten eine Baugruppe bilden.

### Bezugszeichenliste

- 100: Gastank (Schottraum)
- 200: Rückwand
- 110: offene Front
- 2: Leistungsschalterantrieb
- 3: Vakuumschaltkammern
- 4: Leistungsschalter (Vakuumschalter)
- 5: Trennschalter (Dreistellungstrenner)
- 6: Umlenkeinheit
- 7: Trenner-/Erdschalter-Antrieb
- 8: Montagewand
- 9,10: Isolierstangen
- 11,12: Stromanschlussträger
- 13,14: Polträger
- 15: selbsttragende Konsole
- 16: Schenkel
- 17: horizontal verlaufender Wandabschnitt
- 20: zweite Wand (Ausbuchtung)
- 23: Umlenkgetriebe
- 24: gasdichte Kupplungseinrichtung
- 25: Schaltmesser
- 26: Schaltwelle
- 28: Trennerkontakte
- 29: Anschlusswinkel
- 31: Verriegelung (Sicherheitseinrichtung)
- 32: vertikal verlaufende Ränder
- 33: Laschenblech
- 33': Umkantung im Laschenblech
- 34: Blechschenkel des Laschenblechs
- 38' 38": Umkantung; unterer Rand
- 39: oberer Rand
- 40, 41: drei Gewindebolzen; Mutter
- 40.1: drei Führungsschlitze
- 43: Stromschienenanschluss
- 44: Kabeldurchführungen
- 46: Anschlusslaschen
- 48.1; 48.1: Führungsschiene; Führungsausnehmung
- P: Einschubrichtung

## Patentansprüche

1. Schaltanlage mit einem mit Isoliergas füllbaren Gastank (100) und einer selbsttragenden, in den Gastank (100) einschiebbaren Baugruppe für ein metallgekapseltes Leistungsschaltfeld, insbesondere in mehrpoliger Ausführung, die aus einer Montagewand (8) besteht, an der mindestens ein Schalter (4) befestigt ist, und welche eine gasdichte Durchführung (24) zum Anschluss eines Antriebs (2) für den Schalter umfasst, **dadurch gekennzeichnet, dass** auf der Montagewand (8) komplett mindestens ein Schalter (4, 5) und der zugehörige Schalterantrieb (2,7) montiert ist,
und dass die Montagewand (8) mit Führungsmitteln (40.1, 48.2) versehen ist, die mit im Gastank (100) angeordneten Führungselementen (40, 48.1) korrespondieren und dass der umlaufende Rand der Montagewand (8) passgenau mit den zur offenen Seite (110) des Gastanks (100) gerichteten Seitenwänden (105) abschließt.

2. Schaltanlage nach einem der vorhergehenden Ansprüche, **dadurch gekennzeichnet, dass** der umlaufende Rand der Montagewand (8) mit den Kanten der zur offenen Seite (110) des Gastanks (100) gerichteten Seitenwänden (105) eine Schweißfuge bildet.

3. Schaltanlage nach einem der vorhergehenden Ansprüche, **dadurch gekennzeichnet, dass** die Montagewand (8) mit mindestens einem in Richtung auf den Gastank (100) abgekanteten Laschenblech (33) versehen ist und in dem Laschenblech (33) die Führungsmittel (40.1, 48.2) ausgebildet sind.

4. Schaltanlage nach dem vorhergehenden Anspruch, **dadurch gekennzeichnet, dass** an zwei gegenüberliegenden Ränder (32) der Montagewand (8) je ein Laschenblech (33) rechtwinklig in Richtung auf den Gastank (100) abgebogen ist, und die Montagewand (8) an einem dritten Rand (39) mit einer in Richtung auf den Gastank (100) verlaufenden Umkantung (38) versehen ist.

5. Schaltanlage nach einem der vorhergehenden Ansprüche, **dadurch gekennzeichnet, dass** die Führungsmittel (40.1, 48.2) in der Montagewand als Ausnehmungen oder Schlitze ausgebildet sind.

6. Schaltanlage nach einem der vorhergehenden Ansprüche, **dadurch gekennzeichnet, dass** die Führungselemente im Gastank aus mindestens einem Bolzen (40) und/oder mindestens einer Führungsschiene (48.1) bestehen.

7. Schaltanlage nach dem vorhergehenden Anspruch, **dadurch gekennzeichnet, dass** die Führungselemente im Gastank ebenfalls als Befestigungsmittel gestaltet sind.

8. Schaltanlage nach einem der vorhergehenden Ansprüche, **dadurch gekennzeichnet, dass** auf der Montagewand (8) je Pol ein Leistungsschalter (4) mit zugehörigem Antrieb (2) und ein Trennschalter (5) mit zugehörigem Antrieb (7) angeordnet ist.

9. Schaltanlage nach einem der vorhergehenden Ansprüche, **dadurch gekennzeichnet, dass** der Trennschalter (5) auf einer Konsole (15) angeordnet und über diese an der Montagewand (8) befestigt ist und mit einem Umlenkgetriebe (23) in Wirkverbindung steht, das mit dem Trennschalterantrieb (7) über der Kupplungseinrichtung (24) in der Montagewand (8) mit dem Trennschalterantrieb (7) verbunden ist.

10. Schaltanlage nach dem vorhergehenden Anspruch, **dadurch gekennzeichnet, dass** die Konsole (15) als zweischenkliges Profil ausgebildet ist, und dass die Montagewand (8) im Bereich des Trennschalters (5) zur Aufnahme der Konsole (15) rechtwinklig in Richtung des Gastanks (100) unter Bildung eines Wandabschnittes (17) abgebogen ist, wobei sowohl an diesem Wandabschnitt (17) als auch an der Montagewand (8) die Schenkel (16) der als zweischenkliges Profil ausgebildeten Konsole (15) befestigt sind.

11. Schaltanlage nach einem der vorhergehenden Ansprüche, **dadurch gekennzeichnet, dass** im Bereich der Leistungsschalter (4) und des Trennschalters (5) die Montagewand (8) durch eine zweite Wand (20) verstärkt ist, die zumindest im Bereich der gasdichten Kupplungseinrichtung (24) zwischen dem Umlenkgetriebe (23) und dem Schalterantrieb (7) des Trennschalters (5) eine durch Abbiegen gebildete, in Richtung des Gastanks (100) verlaufende Ausbuchtung besitzt.

12. Schaltanlage nach einem der vorhergehenden Ansprüche, **dadurch gekennzeichnet, dass** auf der Vorderseite der Montagewand (8) zwischen den Leistungsschaltern (4) und dem Trennschalter (5) eine als Sicherheitseinrichtung dienende Verriegelung (31) vorgesehen ist, die gemeinsam mit den Leistungsschaltern (4) und dem Trennschalter (5) die Baugruppe bildet.

## Claims

1. Switchgear comprising a gas tank (100) which can be filled with insulating gas and a self-supporting assembly for a metal-encapsulated circuit breaker cubicle, in particular in a multi-pole design, which can be inserted into the gas tank (100) comprising a mounting wall (8) on which at least one switch (4) is affixed and which comprises a gastight bushing (24) for connection of a drive (2) for the switch, **characterised in that** at least one switch (4, 5) and the relevant switch drive (2, 7) is mounted on the mounting wall (8), and that the mounting wall (8) is provided with guide means (40.1, 48.2) which correspond with guide elements (40, 48.1) arranged in the gas tank (100) and that the peripheral edge of the mounting wall (8) terminates so that it fits exactly with the side walls (105) directed towards the open side (110) of the gas tank (100).

2. The switchgear according to any one of the preceding claims, **characterised in that** the peripheral edge of the mounting wall (8) forms a welded join with the edges of the side walls (105) directed towards the open side (110) of the gas tank (100).

3. The switchgear according to any one of the preceding claims, **characterised in that** the mounting wall (8) is provided with at least one sheet metal tab (33) bent in the direction of the gas tank (100) and that the guide means (40.1, 48.2) are formed in the sheet metal tab (33).

4. The switchgear according to any one of the preceding claims, **characterised in that** on two opposing edges (32) of the mounting wall (8) respectively one sheet metal tab (33) is bent at right angles in the direction of the gas tank (100) and at a third edge (39) the mounting wall (8) is provided with a folded edge (38) running in the direction of the gas tank (100).

5. The switchgear according to any one of the preceding claims, **characterised in that** the guide means (40.1, 48.2) are formed in the mounting wall as recesses or slots.

6. The switchgear according to any one of the preceding claims, **characterised in that** the guide elements in the gas tank consist of at least one bolt (40) and/or at least one guide rail (48.1).

7. The switchgear according to any one of the preceding claims, **characterised in that** the guide elements in the gas tank are also configured as fastening means.

8. The switchgear according to any one of the preceding claims, **characterised in that** a circuit breaker (4) with relevant drive (2) and an isolating switch (5) with relevant drive (7) are disposed on the mounting wall (8) per pole.

9. The switchgear according to any one of the preceding claims, **characterised in that** the isolating switch (5) is arranged on a control panel (15) and is affixed to the mounting wall (8) by this means and is in operative connection with a deflecting gear (23) which is connected to the isolating gear drive (7) via the coupling device (24) in the mounting wall (8) with the isolating switch drive (7).

10. The switchgear according to any one of the preceding claims, **characterised in that** the control panel (15) is embodied as a two-legged profile and that in the region of the isolating switch (5) to receive the control panel (15), the mounting wall (8) is bent at right angles in the direction of the gas tank (100) forming a wall section (17), wherein the legs (16) of the control panel (15) embodied as a two-legged profile are affixed both to this wall section (17) and also to the mounting wall (8).

11. The switchgear according to any one of the preceding claims, **characterised in that** in the region of the circuit breaker (4) and the isolating switch (5), the mounting wall (8) is reinforced by a second wall (20) which has a protuberance formed by bending, running in the direction of the gas tank (100), at least in the area of the gastight coupling device (24) between the deflecting gear (23) and the switch drive (7) of the isolating switch (5).

12. The switchgear according to any one of the preceding claims, **characterised in that** on the front side of the mounting wall (8) between the circuit breakers (4) and the isolating switch (5) there is provided a lock (31) serving as a safety device which, jointly with the circuit breakers (4) and the isolating switch (5), forms the assembly.

## Revendications

1. Équipement électrique comprenant un réservoir à gaz (100) qui peut être rempli d'un gaz isolant et un module autoportant insérable dans le réservoir à gaz (100), pour un tableau de commutation de puissance encapsulé dans du métal, en particulier en version multipolaire, qui est constituée d'une paroi de montage (8), sur laquelle est fixé au moins un commutateur (4), et qui comprend un passage étanche aux gaz (24) permettant de raccorder une commande (2) pour le commutateur, **caractérisé en ce que**, sur la paroi de montage (8), on monte complètement au moins un commutateur (4, 5) et la commande de commutateur correspondante (2, 7), **en ce que** la paroi de montage (8) est munie de moyens de guidage (40.1, 48.2) correspondant aux éléments de guidage (40, 48.1) aménagés dans le réservoir à gaz (100) et **en ce que** le bord périphérique de la paroi de montage (8) ferme exactement les parois latérales (105) dirigées vers la face ouverte (110) du réservoir à gaz (100).

2. Équipement électrique selon l'une quelconque des revendications précédentes, **caractérisé en ce que** le bord périphérique de la paroi de montage (8) forme une rainure de soudage avec les arêtes des parois latérales (105) dirigées vers la face ouverte (110) du réservoir à gaz (100).

3. Équipement électrique selon l'une quelconque des revendications précédentes, **caractérisé en ce que** la paroi de montage (8) est pourvue d'au moins une tôle à pattes (33), repliée en direction du réservoir à gaz (100), tôle dans laquelle sont formés les moyens de guidage (40.1, 48.2).

4. Équipement électrique selon la revendication précédente, **caractérisé en ce que**, sur deux bords opposés (32) de la paroi de montage (8), respectivement une tôle à pattes (33) est pliée à angle droit en direction du réservoir à gaz (100) et **en ce que**, sur un troisième bord (39), la paroi de montage (8) est pourvue d'un bord (38) replié en direction du réservoir à gaz (100).

5. Équipement électrique selon l'une quelconque des revendications précédentes, **caractérisé en ce que** les moyens de guidage (40.1, 48.2) se présentent dans la paroi de montage sous la forme d'évidements ou de fentes.

6. Équipement électrique selon l'une quelconque des revendications précédentes, **caractérisé en ce que** les éléments de guidage dans le réservoir à gaz sont constitués d'au moins un boulon (40) et/ou d'au moins un rail de guidage (48.1).

7. Équipement électrique selon la revendication précédente, **caractérisé en ce que** les éléments de guidage dans le réservoir à gaz sont également conçus comme moyens de fixation.

8. Équipement électrique selon l'une quelconque des revendications précédentes, **caractérisé en ce qu'**on aménage, sur la paroi de montage (8), pour chaque pôle, un commutateur de puissance (4) avec une commande correspondante (2) et un sectionneur (5) avec une commande correspondante (7).

9. Équipement électrique selon l'une quelconque des revendications précédentes, **caractérisé en ce que** le sectionneur (5) est aménagé sur une console (15), par le biais de laquelle il est fixé sur la paroi de montage (8), et coopère avec un engrenage de renvoi (23), qui est raccordé à la commande (7) du sectionneur par le biais du dispositif de couplage (24) dans la paroi de montage (8).

10. Equipement électrique selon la revendication précédente, **caractérisé en ce que** la console (15) se présente sous la forme d'un profile à deux branches et **en ce que**, dans la zone du sectionneur (5), pour réceptionner la console (15), la paroi de montage (8) est pliée à angle droit en direction du réservoir à gaz (100) en formant une section de paroi (17), les branches (16) qui sont façonnées sous la forme d'un profilé à deux branches de la console (15), étant fixées autant sur cette section de paroi (17) que sur la paroi de montage (8).

11. Equipement électrique selon l'une quelconque des revendications précédentes, **caractérisé en ce que**, dans la zone du commutateur de puissance (4) et du sectionneur (5), la paroi de montage (8) est renforcée par une seconde paroi (20), qui possède, au moins dans la zone du dispositif de couplage étanche aux gaz (24) entre l'engrenage de renvoi (23) et la commande (7) du sectionneur (5), une indentation, formée par pliage, s'étendant en direction du réservoir à gaz (100).

12. Equipement électrique selon l'une quelconque des revendications précédentes, **caractérisé en ce que** l'on prévoit sur la face avant de la paroi de montage (8), entre les commutateurs de puissance (4) et le sectionneur (5), un verrouillage (31) servant de dispositif de sécurité, qui forme le module conjointement avec les commutateurs de puissance (4) et le sectionneur (5).
